# EUROPEAN PATENT APPLICATION

(11) **EP 4 797 413 A1**
(43) Date of publication of application: **26.08.2026**
(21) Application number: 24878382.1
(22) Date of filing: 09.04.2024
(51) Int. Cl.: H01M 50/342

(54) **BATTERY CELL, BATTERY AND ELECTRICAL APPARATUS**

(30) Priority: 20.10.2023 CN 202322829230 U
(71) Applicant: Contemporary Amperex Technology Co., Limited, Ningde, Fujian 352100 (CN)
(72) Inventor: NIU, Di, Ningde, Fujian 352100 (CN); BAI, Qinglin, Ningde, Fujian 352100 (CN); ZHANG, Zheng, Ningde, Fujian 352100 (CN); MENG, Hao, Ningde, Fujian 352100 (CN)
(74) Representative: Ran, Handong
(86) International application number: PCT/CN2024/086706
(87) International publication number: WO 2025/081728

(57) **Abstract**

The present application relates to a battery cell, a battery and an electrical apparatus. The battery cell comprises a casing and a first protective layer, the casing having a wall portion, the wall portion being provided with a weak portion, and the weak portion being configured to rupture when the internal pressure or temperature of the battery cell reaches a threshold value; the first protective layer is arranged on the wall portion and covers at least part of the weak portion. In the battery cell provided by the present application, the battery cell comprises the casing and the first protective layer, the casing has the wall portion, the wall portion is provided with the weak portion, the weak portion ruptures when the internal pressure or temperature of the battery cell reaches the threshold value, and the first protective layer covers at least part of the weak portion, so as to protect the weak portion, thus reducing corrosion of the weak portion, and ameliorating the impact on the bursting pressure of the weak portion.

## Description

### CROSS-REFERENCE TO RELATED APPLICATIONS

The present application claims priority to Chinese Patent Application No. 202322829230.6, entitled "BATTERY CELL, BATTERY, AND ELECTRICAL APPARATUS" and filed on October 20, 2023, which is incorporated herein by reference in its entirety.

### TECHNICAL FIELD

The present application relates to the technical field of battery production, and in particular to a battery cell, a battery, and an electrical apparatus.

### BACKGROUND

Battery cells are widely used in electronic devices such as mobile phones, laptop computers, electric scooters, electric vehicles, electric aircrafts, electric ships, electric vehicle toys, electric ship toys, electric aircraft toys, and electric tools. The battery cell may include a cadmium-nickel battery cell, a hydrogen-nickel battery cell, a lithium-ion battery cell, a secondary alkaline zinc-manganese battery cell, and the like.

During the development of the battery technologies, how to improve the reliability of batteries is a technical problem to be resolved urgently in the battery technologies.

### SUMMARY

The present application provides a battery cell, a battery and an electrical apparatus, to improve the reliability of batteries to some extent.

In a first aspect, the present application provides a battery cell. The battery cell includes a casing and a first protective layer. The casing has a wall portion, the wall portion is provided with a weak portion, and the weak portion is configured to rupture when the internal pressure or temperature of the battery cell reaches to a threshold value. The first protective layer is arranged on the wall portion and covers at least part of the weak portion.

In the battery cell provided in the present application, the battery cell includes the casing and the first protective layer. The casing has the wall portion, the wall portion is provided with the weak portion, and the weak portion ruptures when the internal pressure or temperature of the battery cell reaches to the threshold value; and the first protective layer covers at least part of the weak portion, so as to protect the weak portion, thus reducing corrosion of the weak portion, and ameliorating the impact on the bursting pressure of the weak portion. In addition, the first protective layer also has a buffering effect on the weak portion, to reduce the scratching or bumping of personnel or objects by the weak portion that ruptures when the internal pressure or temperature of the battery cell reaches to the threshold value; and effectively relieve the case in which the weak portion is activated to rupture in advance during use. Therefore, the service life and the reliability during use of the battery cell having the first protective layer are improved.

According to an embodiment of the present application, the first protective layer is located on an outer side of the wall portion.

In these optional embodiments, the first protective layer is located on the outer side of the wall portion, which provides protection against corrosion and does not occupy space inside the battery cell, thus improving the energy density of the battery cell. In addition, the first protective layer is arranged on an outer side of the battery cell; and when the battery cell is impacted by a force, the first protective layer on the outer side of the battery cell can disperse the acting force, to reduce the impact on the battery cell.

According to an embodiment of the present application, the wall portion has an inner surface and an outer surface that are oppositely arranged in a thickness direction. The wall portion is provided with a first recess depressed from the inner surface, and a portion of the wall portion corresponding to a bottom of the first recess forms the weak portion. The first protective layer is attached to the outer surface and covers the weak portion.

In these optional embodiments, the harboring of dirt and stain by the first recess on the wall portion can be reduced during use.

According to an embodiment of the present application, the wall portion has an inner surface and an outer surface that are oppositely arranged in a thickness direction. The wall portion is provided with a second recess depressed from the outer surface, and a portion of the wall portion corresponding to a bottom of the second recess forms the weak portion. The first protective layer is at least partly arranged in the second recess.

In these optional embodiments, because the weak portion will burst to rupture under a particular pressure, it has a stress after processing and is weaker than other portions of the wall portion. Therefore, by arranging the depressed second recess on the outer surface, the weak portion is not easily directly touched, thereby protecting the weak portion to some degree. In addition, the second recess located on the outer surface has relatively low processing difficulty, thus reducing the processing and manufacturing cost.

According to an embodiment of the present application, the first protective layer is level with an edge of an opening of the second recess.

In these optional embodiments, the weak portion cooperates with the first protective layer, and the first protective layer is level with the edge of the opening of the second recess, so that the battery cell has an entirely even external surface and the assembly of the battery cell will not be affected.

According to an embodiment of the present application, the wall portion has an inner surface and an outer surface that are oppositely arranged in a thickness direction. The wall portion includes a strengthening portion projecting from the inner surface, and the wall portion is provided with a first groove depressed relative to the outer surface at a position corresponding to the strengthening portion. The battery cell further includes a second protective layer, and the second protective layer is at least partly arranged in the first groove.

In these optional embodiments, when the wall portion is deformed, the strengthening portion can reduce the impact of the deformation on the weak portion, thereby reducing the risk of liquid leakage from the weak portion.

According to an embodiment of the present application, the wall portion has an inner surface and an outer surface that are oppositely arranged in a thickness direction. The wall portion includes a strengthening portion projecting from the outer surface, and the wall portion is provided with a second groove depressed relative to the inner surface at a position corresponding to the strengthening portion. The battery cell further includes a second protective layer, and the second protective layer is attached to the outer surface and covers the strengthening portion.

In these optional embodiments, not only the structural strength is enhanced, and the occupation of the internal space inside the battery cell is reduced or the occupation of the internal space of the battery is reduced, thus improving the energy density of the battery. When receiving an external impact force, the strengthening portion protruding laterally can absorb the energy of external impact, to reduce the impact of the external impact on the location where the weak portion resides and avoid the damage of the location where the weak portion resides due to the external impact to some extent.

According to an embodiment of the present application, the wall portion further includes a body portion, where the weak portion is connected to the body portion, and the first protective layer further covers at least a part of the body portion.

In these optional embodiments, when the weak portion is processed and manufactured, an edge region of the weak portion is affected. Therefore, the first protective layer is designed to cover the weak portion and extend toward the body portion, so that the first protective layer covers at least a part of the body portion, and the corrosion of the edge region of the weak portion is reduced.

According to an embodiment of the present application, in a radial direction of the wall portion, a size of an area of the body portion covered by the first protective layer is greater than or equal to 0.1 mm.

According to an embodiment of the present application, the thickness of the first protective layer is less than or equal to the thickness of the weak portion.

In these optional embodiments, the first protective layer has an adaptive thickness, to meet the anti-corrosion performance and reduce the impact on the bursting pressure of the weak portion.

According to an embodiment of the present application, the thickness of the first protective layer is greater than or equal to 10 µm.

In these optional embodiments, the first protective layer needs to meet working condition tests such as high temperature resistance test, high and low temperature damp heat cyclic test, and salty fog resistance test. Therefore, the thickness of the first protective layer is greater than or equal to 10 µm, and the first protective layer can meet the working condition tests.

According to an embodiment of the present application, the strength of the first protective layer is less than or equal to the strength of the weak portion.

In these optional embodiments, such an arrangement can reduce the impact on the bursting pressure of the weak portion.

According to an embodiment of the present application, the material of the first protective layer is selected from one of a polyarylate, a polyurethane, or an epoxy resin.

In these optional embodiments, these specific optional materials are used, so that the first protective layer has relatively good anti-corrosion performance.

According to an embodiment of the present application, the casing includes a shell and an end cover, where the shell has an opening; the end cover closes the opening; and the wall portion is the end cover or a wall of the shell.

In these optional embodiments, the wall portion may be the end cover, a bottom wall of the shell, or a side wall of the shell. The weak portion is arranged on the end cover, the bottom wall or the side wall at a position close to an edge, so that it is not prone to fatigue failure under gas pressure. This reduces the risk earlier opening up of the weak portion, so that the battery cell can work normally.

In a second aspect, the present application provides a battery, which includes the battery cell described above.

In a third aspect, the present application provides an electrical apparatus, which includes multiple battery cells described above or multiple batteries described above configured to provide electric energy.

The above description is only a summary of the technical solutions of the present application. To make the technical means of the present application clearer and implementable in accordance with the disclosure of the specification, and make the above and other objects, and the features and advantages of the present application more comprehensible, specific embodiments of the present application will be described below.

### BRIEF DESCRIPTION OF THE DRAWINGS

The features, advantages, and technical effects of the exemplary embodiments of the present application will be described below with reference to the accompanying drawings.
FIG. 1 is a schematic structural view of a vehicle provided in an embodiment of the present application;
FIG. 2 is an exploded view of a battery provided in some embodiments of the present application;
FIG. 3 is a schematic structural view of a battery cell provided in an embodiment of the present application;
FIG. 4 is a exploded view of a battery cell provided in an embodiment of the present application;
FIG. 5 is a bottom view of a wall portion of a battery cell provided in an embodiment of the present application;
FIG. 6 is a cross-sectional view of a wall portion of a battery cell provided in an embodiment of the present application;
FIG. 7 is a schematic structural view of a portion at A-A shown in FIG. 6.
FIG. 8 is a schematic structural view of a wall portion of a battery cell having a first protective layer and a second protective layer provided in an embodiment of the present application;
FIG. 9 is a top view of a wall portion of a battery cell provided in another embodiment of the present application;
FIG. 10 is a cross-sectional view of a wall portion of a battery cell provided in another embodiment of the present application;
FIG. 11 is a schematic structural view of a portion at B-B shown in FIG. 10.
FIG. 12 is a schematic structural view of a wall portion of a battery cell having a first protective layer and a second protective layer provided in another embodiment of the present application;
FIG. 13 is a schematic structural view of a shell of a battery cell provided in an embodiment of the present application;
FIG. 14 is a cross-sectional view of a shell of a battery cell provided in an embodiment of the present application; and
FIG. 15 is an enlarged schematic structural view of a portion C shown in FIG. 14.

In the drawings, the figures are not drawn to actual scale.

### List of reference numerals:

1000. vehicle;
100. battery; 200. controller; 300. motor;
10. battery cell; 20. cover body; 30. lower box;
1. casing; 11. wall portion; 111. inner surface; 112. outer surface; 113. first recess; 114. second recess; 12. weak portion; 13. strengthening portion; 131. first groove; 132. second groove; 14. body portion; 15. shell; 16. end cover;
2. first protective layer;
3. second protective layer.

### DETAILED DESCRIPTION

To make the objects, technical solutions and advantages of the embodiments of the present application clearer, the technical solution according to the embodiments of the present application will be described clearly and fully below Hereinafter, the technical solutions in the embodiments of the present application will be described clearly in combination with specific embodiments. Apparently, the embodiments described are merely some, but not all of the embodiments of the present application. All other embodiments obtained by a person of ordinary skill in the art based on the embodiments of the present application without creative efforts shall fall within the protection scope of the present application.

Unless otherwise stated, all technical and scientific terms used in the present application have the same meaning as commonly understood by persons skilled in the art to which the present application pertains. The terms used in the descriptions of the present application are merely for the purpose of describing specific embodiments and not intended to limit the present application. The terms "including" and "having" and any variations thereof in the specification, claims, and the description of drawings of the present application are intended to cover a non-exclusive inclusion. The term "first", "second", and others used in the specification, claims or drawings of the present application are used to distinguish different objects, rather than describe a particular order or primary-secondary relationships.

Reference in the present application to "an embodiment" means that a particular feature, structure, or characteristic described in connection with the embodiment can be included in at least one embodiment of the present application. The appearance of this phrase anywhere in the specification does not necessarily refer to the same embodiment, or a separate or alternative embodiment that is mutually exclusive with other embodiments.

In the description of the present application, it is to be understood that unless otherwise clearly specified and defined, the terms "mounting", "connection", "connect", and "attach" should be understood in a broad sense. For example, the connection may be a fixed connection, a detachable connection, or an integral connection; or the connection may be a direct connection, or an indirect connection via an intermediate structure; or the connection may be the internal communication of two elements. For those of ordinary skill in the art, specific meanings of the foregoing terms in the present application can be understood according to specific situations.

In the present application, the term "and/or" is merely an association to describe associated objects, and means that there may be three kinds of relationships. For example, A and/or B means the existence of A alone, the existence of both A and B, and the existence of B alone. Moreover, the character "/" in the present application generally indicates an "or" relationship between the preceding and following objects.

In the embodiments of the present application, the same parts are indicated by the same reference numerals, and for brevity, detailed descriptions of the same components are omitted in different embodiments. It is to be understood that the thickness, length, width and other dimensions of various components in the embodiments of the present application shown in the drawings, as well as the overall thickness, length, width and other dimensions of integrated device, are merely for illustrative purposes, and should not constitute any limitations on the present application.

"Multiple" in the present application refers to two or more (including two).

In the present application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of the present application. The battery cell may be in a cylindrical shape, a flat shape, a cuboid shape, or other shapes, which is not limited in the embodiments of the present application.

The battery mentioned in the embodiments of the present application may include a single physical module including one or more battery cells to provide a higher voltage and capacity. When there are multiple battery cells, the multiple battery cells are connected in series, or in series-parallel through a bus-bar component.

In some embodiments, the battery may be a battery module. When there are multiple battery cells, the multiple battery cells are arranged and fixed to form a battery module.

In some embodiments, the battery may be a battery pack including a box and a battery cell, where the battery cell or the battery module is accommodated in the box.

In some embodiments, the box may serve as a part of a chassis structure of a chassis structure of a vehicle. For example, a part of the box may become at least a part of a floor of the vehicle, or a part of the box may become at least a part of a transverse beam and a longitudinal beam of the vehicle.

In related art, the casing of the battery cell is formed to have a weak portion directly serving as an anti-explosion valve. The weak portion is arranged inside or outside the casing by means of punching, milling, or the like. This may causes damage of a surface coating of the casing. Under the working conditions during subsequent transportation, storage, and use, the weak portion may be corroded, which affects the bursting pressure and reduces the reliability of the battery cell. The forgoing description merely provides background information related to the present application and does not necessarily constitute the prior art.

In view of the foregoing problems, in the battery cell provided in the present application, the battery cell includes the casing and the first protective layer. The casing has the wall portion, the wall portion is provided with the weak portion, and the weak portion ruptures when the internal pressure or temperature of the battery cell reaches to the threshold value; and the first protective layer covers at least part of the weak portion, so as to protect the weak portion, thus reducing corrosion of the weak portion, and ameliorating the impact on the bursting pressure of the weak portion.

The battery may be applied to a vehicle, a cell phone, a portable device, a laptop computer, a ship, a spacecraft, an electric toy, an electric tool, and the like. Vehicles can be fuel vehicles, gas vehicles, or new energy vehicles. New energy vehicles can be all-electric vehicles, hybrid vehicles, or extended-range vehicles. Spacecrafts include aircrafts, rockets, space shuttles, and spaceships, etc. Electric toys include fixed or mobile electric toys, for example, game machines, electric vehicle toys, electric ship toys and electric aircraft toys, etc. Electric tools include metal cutting electric tools, electric grinding tools, electric assembling tools, and railway electric tools such as electric drills, electric grinders, electric wrenches, electric screwdrivers, electric hammers, electric impact drills, concrete vibrators, and electric planers. The tab production equipment is not particularly limited in the embodiments of the present application.

In some embodiments, the battery may be an energy storage apparatus. The energy storage apparatus includes an energy storage container, and an energy storage cabinet, etc.

For ease of description, the following embodiment is described by using an example in which the electrical apparatus according to an embodiment of the present application is a vehicle.

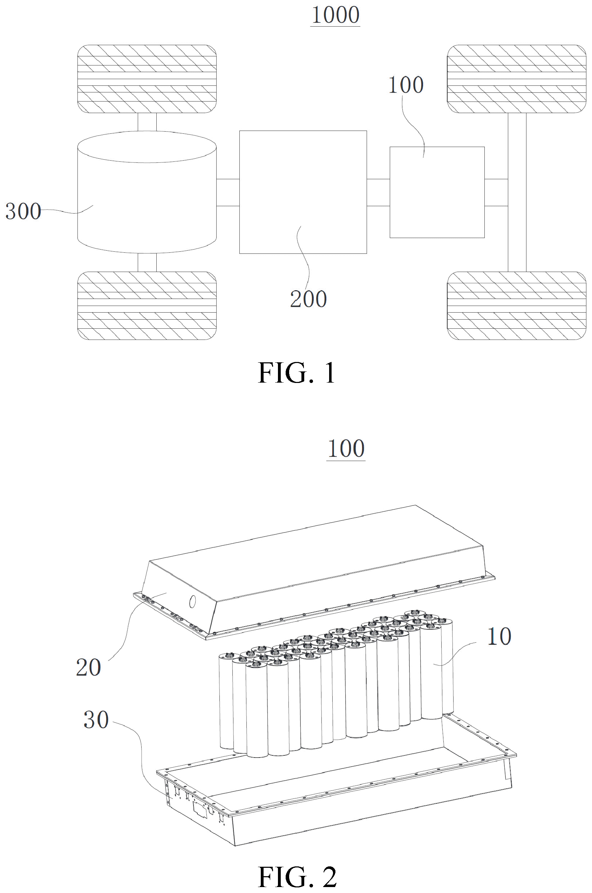

Referring to FIG. 1, an embodiment of the present application provides a vehicle 1000. The vehicle 1000 may be a fuel vehicle, a gas vehicle, or a new energy vehicle. The new energy vehicle may be an all-electric vehicle, a hybrid vehicle, or an extended-range vehicle. In an embodiment of the present application, the vehicle 1000 may include a motor 300, a controller 200, and a battery 100. The controller 200 is configured to control the battery 100 to supply power to the motor 300. The motor 300 is connected to the wheel by a transmission mechanism, to drive the vehicle 1000 to travel. The battery 100 can serve as a drive power supply of the vehicle 1000, to provide a drive power for the vehicle 1000 in place or partly in place of fuel or natural gas. In an example, the battery 100 may be arranged at the bottom, the front, or the rear of the vehicle 1000. The battery 100 can be configured to supply power to the vehicle 1000. In an example, the battery 100 may serve as an operating power supply of the vehicle 1000, and be used in a circuit system of the vehicle 1000. For example, the battery 100 can be used for the working electricity requirements during the startup, navigation, and running of the vehicle 1000.

Referring to FIG. 2, FIG. 2 is an exploded view of a battery provided in some embodiments of the present application. The battery 100 includes a box and a battery cell. In some embodiments, the box may include a cover body 20 and a lower box 30, where the cover body 20 and the lower box 30 cover each other, and the cover body 20 and the lower box 30 jointly define an accommodating space for accommodating the battery cell. The lower box 30 may be a hollow structure with an opening at one end, the cover body 20 may be a plate-like structure, and the cover body 20 covers an opening side of the lower box 30, so that the cover body 20 and the lower box 30 jointly define the accommodating space. The cover body 20 and the lower box 30 may both be a hollow structure with an opening on one side, and an opening side of the cover body 20 covers an opening side of the lower box 30. Definitely, the box formed by the cover body 20 and the lower box 30 may be in various shapes, such as a cylinder, and a cuboid.

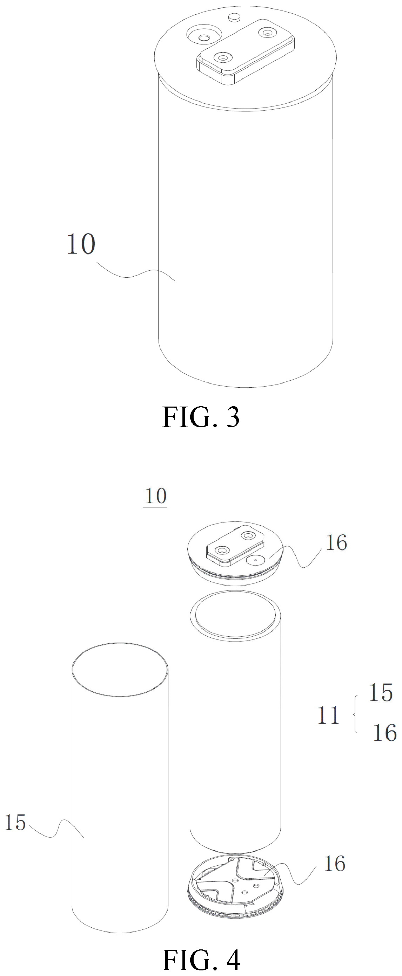

Referring to FIGs. 2 to 4, FIG. 3 is a schematic structural view of a battery cell provided in an embodiment of the present application; and FIG. 4 is an exploded view of a battery cell provided in an embodiment of the present application. In the battery 100, multiple battery cells 10 may be arranged, and the multiple battery cells 10 can be connected to each other in series, in parallel, or in a parallel-series manner. The parallel-series manner indicates that the multiple battery cells 10 are connected in both series and parallel. The multiple battery cells 10 may be directly connected together in series, parallel, or series-parallel, and then a whole formed by the multiple battery cells 10 are accommodated in the box. Definitely, the battery 100 may alternatively be in such a form that multiple battery cells 10 are connected in series, parallel, or series-parallel to form a battery module, and then multiple battery modules are connected in series, parallel, or series-parallel to form a whole which is accommodated in the box. The battery 100 may further include other structures. For example, the battery 100 may also include a busbar component for achieving electrical connection between the multiple battery cells.

Each battery cell may be, but is not limited to, a lithium-ion battery cell, a lithium-sulfur battery cell, a sodium-ion battery cell, a magnesium-ion battery cell. The battery cell may be in a cylindrical shape, a flat shape, a cuboid shape, or other shapes.

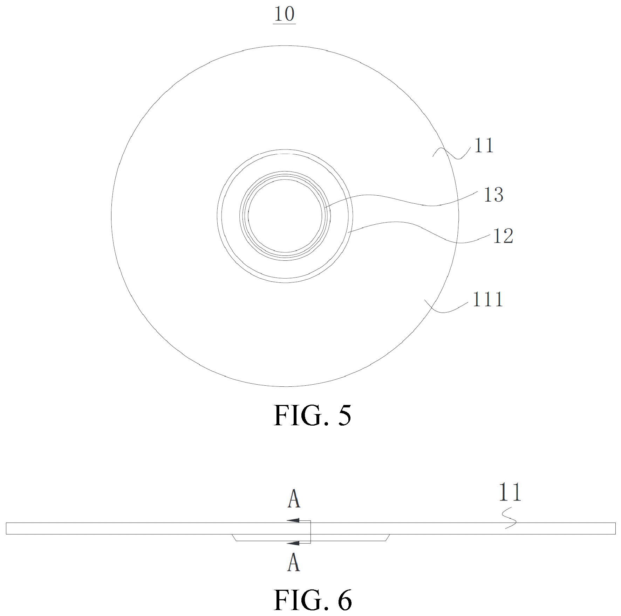

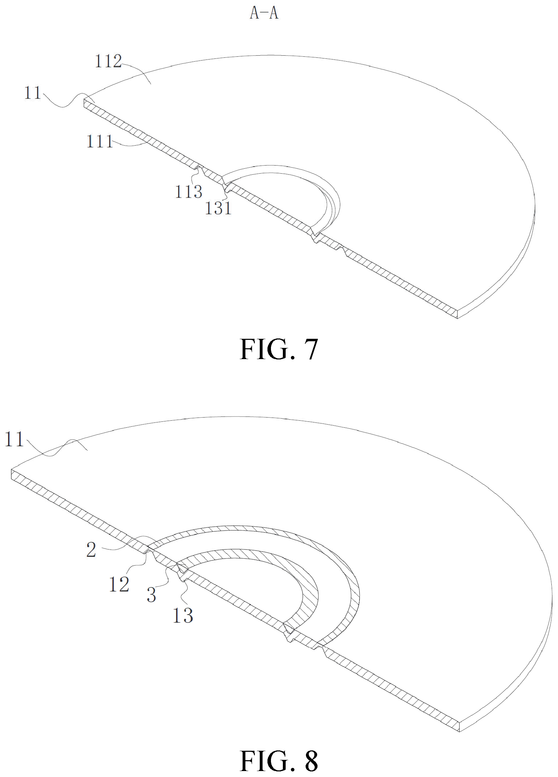

Referring to FIGs. 5 to 8, FIG. 5 is a bottom view of a wall portion of a battery cell provided in an embodiment of the present application; FIG. 6 is a cross-sectional view of a wall portion of a battery cell provided in an embodiment of the present application; FIG. 7 is a schematic structural view of a portion at A-A shown in FIG. 6; and FIG. 8 is a schematic structural view of a wall portion of a battery cell having a first protective layer and a second protective layer provided in an embodiment of the present application.

In a first aspect, as shown in FIGs. 5 to 8, the present application provides a battery cell 10. The battery cell 10 includes a casing 1 and a first protective layer 2. The casing 1 has a wall portion 11, the wall portion 11 is provided with a weak portion 12, and the weak portion 12 is configured to rupture when the internal pressure or temperature of the battery cell 10 reaches to a threshold value. The first protective layer 2 is arranged on the wall portion 11 and covers at least part of the weak portion 12.

The casing 1 is a component configured to isolate an internal environment of the battery cell 10 from an external environment. The internal environment formed by the casing 1 is configured to accommodate an electrode assembly, an electrolyte solution, and other components.

The weak portion 12 is a structure configured to rupture when the internal pressure or temperature of the battery cell 10 reaches to a threshold value, to release the internal pressure of the battery cell 10 and reduce the risk of explosion and fire of the battery cell 10.

The casing 1 has multiple walls, such as a bottom wall and a side wall. Each wall of the casing 1 can be used as the wall portion 11.

For example, the bottom wall can be the wall portion 11. In this case, the weak portion 12 is arranged on the bottom wall.

For example, the side wall may be the wall portion 11. In this case, the weak portion 12 is arranged on the side wall.

For example, the end cover 16 can be solely used as the wall portion 11. In this case, the weak portion 12 is arranged on the end cover 16.

It is to be understood that the casing 1 may have multiple wall portions 11, and each wall portion 11 is provided with the weak portion 12. For example, both the bottom wall and the side wall are the wall portions 11. In this case, the bottom wall and the side wall are both provided with the weak portion 12.

The first protective layer 2 is arranged on the wall portion 11 and covers at least part of the weak portion 12, so as to protect the weak portion 12, reduce the corrosion of the weak portion 12, and ameliorate the impact on the bursting pressure of the weak portion 12.

In the embodiment of the present application, the first protective layer 2 covers at least part of the weak portion 12. It can be understood that the first protective layer 2 covers part of the weak portion 12, or the first protective layer 2 fully covers the weak portion 12. In addition, the first protective layer 2 may further cover other portions of the wall portion 11 besides the weak portion 12.

Specifically, the first protective layer 2 is an anti-corrosion protective layer, so as to reduce the infiltration of water.

In the embodiment of the present application, the first protective layer 2 is arranged on the wall portion 11. Specifically, the wall portion 11 has an outer surface 112 and an inner surface 111, and the first protective layer 2 is arranged on the outer surface 112; or the first protective layer 2 is arranged on the inner surface 111, and both the outer surface 112 and the inner surface 111 are arranged with the first protective layer 2.

In the battery cell 10 provided in the present application, the battery cell 10 includes the casing 1 and the first protective layer 2. The casing 1 has the wall portion 11, the wall portion 11 is provided with the weak portion 12, and the weak portion 12 ruptures when the internal pressure or temperature of the battery cell 10 reaches to the threshold value. The first protective layer 2 covers at least part of the weak portion 12, so as to protect the weak portion 12, reduce the corrosion of the weak portion 12, and ameliorate the impact on the bursting pressure of the weak portion 12. In addition, the first protective layer 2 also has a buffering effect on the weak portion 12, to reduce the risk of scratching or bumping personnel or objects by the weak portion 12 that ruptures when the internal pressure or temperature of the battery cell 10 reaches to the threshold value; and effectively relieve the case in which the weak portion 12 is activated to rupture in advance during use. Therefore, the service life and the reliability during use of the battery cell 10 having the first protective layer 2 are improved.

According to an embodiment of the present application, the first protective layer 2 is located on the outer side of the wall portion 11.

In the embodiment of the present application, the wall portion 11 has the inner surface 111 and the outer surface 112 that are oppositely arranged in a thickness direction, where the inner surface 111 is provided with the weak portion 12, or the outer surface 112 is provided with the weak portion 12; or both the inner surface 111 and the outer surface 112 are provided with the weak portion 12.

For example, the inner surface 111 is provided with the weak portion 12, the first protective layer 2 is located on the outer side of the wall portion 11, and a projection of the first protective layer on the wall portion 11 in the thickness direction at least overlaps with the weak portion 12.

For example, the outer surface 112 is provided with the weak portion 12, and the first protective layer 2 is attached to the weak portion 12.

The weak portion 12 is the weak portion 12 on the casing 1 component, and during the processing and manufacturing process, the weak portion 12 having a relatively small thickness is usually processed in a region of the casing 1 component.

For example, a material of a particular thickness is cut off and removed from the wall portion 11 by using a tool, to form the weak portion 12.

For example, a region of the wall portion 11 is punched into a relatively thin region, to form the weak portion 12.

For example, a region of the wall portion 11 is milled into a relatively thin region, to form the weak portion 12.

Optionally, a score or a groove is provided on the wall portion 11, to form the weak portion 12.

In these optional embodiments, the first protective layer 2 is located on the outer side of the wall portion 11, which provides protection against corrosion and does not occupy space inside the battery cell 10, thus improving the energy density of the battery cell 10. In addition, the first protective layer 2 is arranged on the outer side of the battery cell 10; and when the battery cell 10 is impacted by a force, the first protective layer 2 on the outer side of the battery cell 10 can disperse the acting force, to reduce the impact on the battery cell 10.

According to an embodiment of the present application, as shown in FIGs. 5 to 8, the wall portion 11 has the inner surface 111 and the outer surface 112 that are oppositely arranged in a thickness direction. The wall portion 11 is provided with a first recess 113 depressed from the inner surface 111, and a portion of the wall portion 11 corresponding to a bottom of the first recess 113 forms the weak portion 12. The first protective layer 2 is attached to the outer surface 112 and covers the weak portion 12.

The inner surface 111 and the outer surface 112 of the wall portion 11 are two surfaces of the wall portion 11 that are opposite to each other in the thickness direction, and a distance between the inner surface 111 and the outer surface 112 is the thickness of the wall portion 11. The outer surface 112 faces the outside of the battery cell 10, and the inner surface 111 faces the inside of the battery cell 10.

In the embodiment of the present application, the wall portion 11 is provided with the first recess 113 depressed from the inner surface 111, and the first recess 113 may be a recess of various shapes, for example, an arc shape, an H-shape, a U-shape, and an annular shape. The first recess 113 may be processed and formed on the wall portion 11 by many methods, for example, milling punching, or cold heading.

For example, the first recess 113 is formed by punching, in which the wall portion 11 is punched in a direction from the inner surface 111 to the outer surface 112 to form the first recess113, and a portion of the wall portion 11 corresponding to a bottom of the first recess 113 forms the weak portion 12.

In the embodiment of the present application, the portion of the wall portion 11 corresponding to the bottom of the first recess 113 forms the weak portion 12, the weak portion 12 located on the outer side is level with other portions of the outer surface 112 of the wall portion 11, and the first protective layer 2 is attached to the outer side of the weak portion 12.

In these optional embodiments, the harboring of dirt and stain by the first recess 113 on the wall portion 11 during use can be reduced.

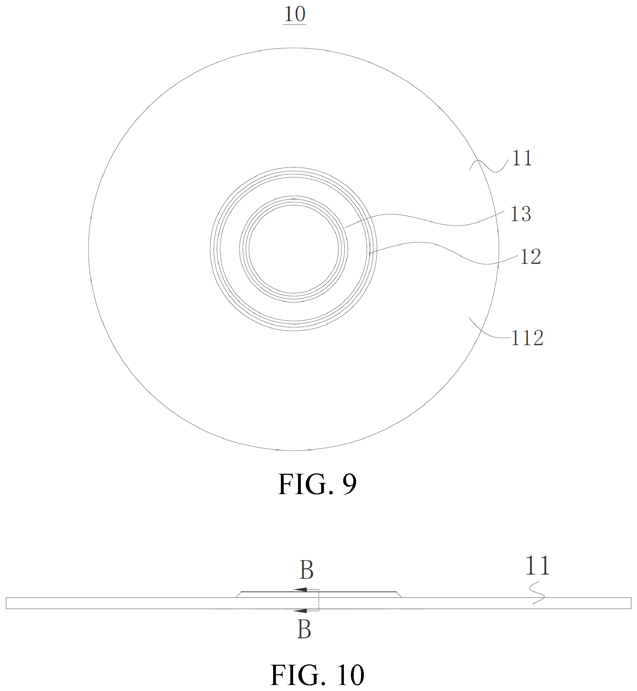

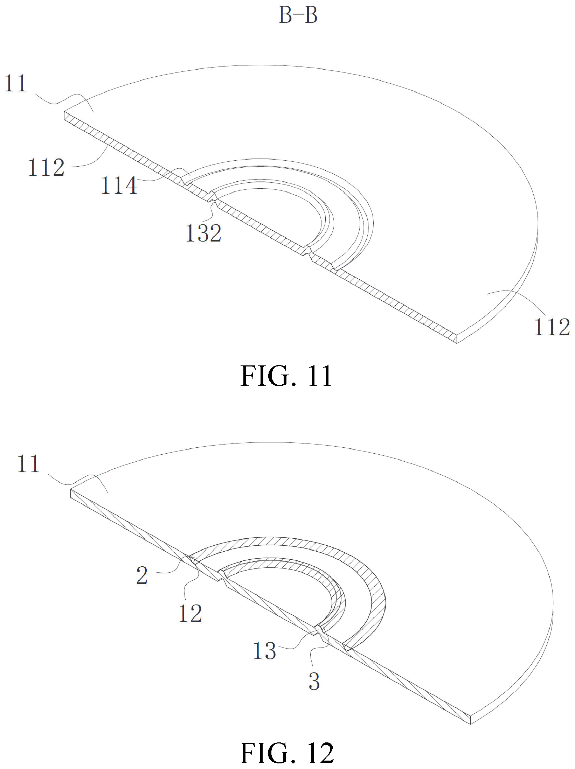

Referring to FIGs. 9 to 12, FIG. 9 is a top view of a wall portion of a battery cell provided in another embodiment of the present application; FIG. 10 is a cross-sectional view of a wall portion of a battery cell provided in another embodiment of the present application; FIG. 11 is a schematic structural view of a portion at B-B shown in FIG. 10; and FIG. 12 is a schematic structural view of a wall portion of a battery cell having a first protective layer and a second protective layer provided in another embodiment of the present application.

According to an embodiment of the present application, as shown in FIGs. 9 to 12, the wall portion 11 has an inner surface 111 and an outer surface 112 that are oppositely arranged in a thickness direction. The wall portion 11 is provided with a second recess 114 depressed from the outer surface 112, and a portion of the wall portion 11 corresponding to a bottom of the second recess 114 forms the weak portion 12. The first protective layer 2 is at least partly arranged in the second recess 114.

In an embodiment of the present application, the first protective layer 2 is at least partly arranged in the second recess 114, and the first protective layer 2 can be filled in a part of the second recess 114. It can be understood that the maximum thickness of the first protective layer 2 is less than the depth of the second recess 114. The first protective layer 2 may also be filled fully in the second recess 114.

In these optional embodiments, because the weak portion 12 will burst to rupture under a particular pressure, it has a stress after processing and is weaker than other portions of the wall portion 11. Therefore, by arranging the depressed second recess 114 on the outer surface 112, the weak portion 12 is not easily directly touched, thereby protecting the weak portion 12 to some degree. In addition, the second recess 114 located on the outer surface 112 has relatively low processing difficulty, thus reducing the processing and manufacturing cost.

According to an embodiment of the present application, the first protective layer 2 is level with an edge of an opening of the second recess 114.

In the embodiment of the present application, the first protective layer 2 is filled fully in the second recess 114, and the first protective layer 2 is level with the edge of the opening of the second recess 114.

In these optional embodiments, the weak portion 12 cooperates with the first protective layer 2, and the first protective layer 2 is level with the edge of the opening of the second recess 114, so that the battery cell 10 has an entirely even external surface 112 and the assembly of the battery cell 10 will not be affected.

According to an embodiment of the present application, as shown in FIGs. 7 and 8, the wall portion 11 has an inner surface 111 and an outer surface 112 that are oppositely arranged in a thickness direction. The wall portion 11 further includes a strengthening portion 13 projecting from the inner surface 111, and the wall portion 11 is provided with a first groove 131 depressed relative to the outer surface 112 at a position corresponding to the strengthening portion 13. The battery cell 10 further includes a second protective layer 3, and the second protective layer 3 is at least partly arranged in the first groove 131.

In the embodiment of the present application, the strengthening portion 13 is arranged to protrude from the inner surface 111, to form a protrusion on the inner surface 111. The wall portion 11 is provided the first groove 131 depressed relative to the outer surface 112 at the position corresponding to the strengthening portion 13, so that the structural strength of the wall portion 11 is improved without changing the thickness of the wall portion 11.

For example, the wall portion 11 is locally punched from the outer surface 112 toward the inner surface 111, to form the protrusion on the inner surface 111 and the first groove 131 on the outer surface 112, thus forming the strengthening portion 13.

The battery cell 10 further includes the second protective layer 3, and the second protective layer 3 is arranged on the outer side and at least partly located in the first groove 131.

In an embodiment of the present application, the second protective layer 3 is at least partly arranged in the first groove 131, and the second protective layer 3 can be filled in a part of the first groove 131. It can be understood that the maximum thickness of the second protective layer 3 is less than the depth of the first groove 131. The second protective layer 3 may also be filled fully in the first groove 131.

Optionally, the second protective layer 3 is level with an edge of an opening of the first groove 131.

For example, the second protective layer 3 has the same thickness as that of the first protective layer 2.

In these optional embodiments, when the wall portion 11 is deformed, the strengthening portion 13 can reduce the impact of the deformation on the weak portion 12, thereby reducing the risk of liquid leakage from the weak portion 12.

According to an embodiment of the present application, as shown in FIGs. 11 and 12, the wall portion 11 has an inner surface 111 and an outer surface 112 that are oppositely arranged in a thickness direction. The wall portion 11 further includes a strengthening portion 13 projecting from the outer surface 112, and the wall portion 11 is provided with a second groove 132 depressed relative to the inner surface 111 at a position corresponding to the strengthening portion 13. The battery cell 10 further includes a second protective layer 3, and the second protective layer 3 is attached to the outer surface 112 and covers the strengthening portion 13.

In these optional embodiments, not only the structural strength is enhanced, and the occupation of the internal space inside the battery cell 10 is reduced or the occupation of the internal space of the battery is reduced, thus improving the energy density of the battery. When receiving an external impact force, the strengthening portion 13 protruding from the outer side can absorb the energy of external impact, to reduce the impact of the external impact on the location where the weak portion 12 resides and avoid the damage of the location where the weak portion 12 resides due to the external impact to some extent.

According to an embodiment of the present application, the wall portion 11 further includes a body portion 14. The weak portion 12 is connected to the body portion 14, and the first protective layer 2 further covers at least a part of the body portion 14.

In the embodiment of the present application, the wall portion 11 includes the weak portion 12 and the body portion 14, and the weak portion 12 is connected to the body portion 14. The first protective layer 2 includes a body portion 14 and an extension portion, the body portion 14 is connected to the extension portion and extends towards the body portion 14, the body portion 14 covers the weak portion 12, and the extension portion covers at least a part of the body portion 14. The extension portion can cover a part of the body portion 14, or the extension portion can cover the body portion 14 fully.

Optionally, in a radial direction of the wall portion, a size of an area of the body portion 14 covered by the first protective layer 2 is greater than or equal to 0.1 mm.

In these optional embodiments, when the weak portion 12 is processed and manufactured, an edge region of the weak portion 12 is affected. Therefore, the first protective layer 2 is designed to cover the weak portion 12 and extend toward the body portion 14, so that the first protective layer 2 covers at least a part of the body portion 14, and the corrosion of the edge region of the weak portion 12 is reduced.

According to an embodiment of the present application, the thickness of the first protective layer 2 is less than or equal to the thickness of the weak portion 12.

For example, the wall portion 11 has an inner surface 111 and an outer surface 112 that are oppositely arranged in a thickness direction. The wall portion 11 is provided with a second recess 114 depressed from the outer surface 112, and a portion of the wall portion 11 corresponding to a bottom of the second recess 114 forms the weak portion 12. The thickness of the second recess 114 is less than the thickness of the weak portion 12, and the depth of the first protective layer 2 is less than the depth of the second recess 114.

In these optional embodiments, the first protective layer 2 has an adaptive thickness, to meet the anti-corrosion performance and reduce the impact on the bursting pressure of the weak portion 12.

According to an embodiment of the present application, the thickness of the first protective layer 2 is greater than or equal to 10 µm.

In these optional embodiments, the first protective layer 2 needs to meet working condition tests such as high temperature resistance test, high and low temperature damp heat cyclic test, and salty fog resistance test. Therefore, the thickness of the first protective layer 2 is greater than or equal to 10 µm, and the first protective layer 2 can meet the working condition tests.

According to an embodiment of the present application, the thickness of the first protective layer 2 meets 10 µm < d ≤ 500 µm.

In some embodiments of the present application, the thickness of the first protective layer 2 is: 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, 410 µm, 420 µm, 430 µm, 440 µm, 450 µm, 460 µm, 470 µm, 480 µm, 490 µm, 500 µm or in other ranges defined by any two of the above endpoints.

Specifically, the thickness of the first protective layer 2 is 50 µm < d ≤ 200 µm.

In these optional embodiments, the first protective layer 2 has a suitable thickness, so the amount of usage of the first protective layer 2 is reduced, to reduce the cost.

According to an embodiment of the present application, the strength of the first protective layer 2 is less than or equal to the strength of the weak portion 12.

In the embodiment of the present application, the strength is tensile strength, and can be determined by using a tensile test method (for example, GB/T228.1-2010 "Metallic materials. Tensile testing").

In these optional embodiments, such an arrangement can reduce the impact on the bursting pressure of the weak portion 12.

According to an embodiment of the present application, the material of the first protective layer 2 is selected from one of a polyarylate, a polyurethane, or an epoxy resin.

In some embodiments of the present application, the material of the first protective layer 2 is selected from a polyarylate, a polyurethane, an epoxy resin, and other polymer materials, so that the first protective layer 2 has a higher anti-corrosion performance, to reduce the infiltration of water.

Specifically, the raw material of the first protective layer 2 is prepared into a paste having a viscosity of 1 cps to 1000 cps, which is applied to the surface of the weak portion 12 by spraying, printing, or dispensing. The adhesion of the first protective layer 2 can be improved by means of laser processing, plasma processing, or the like.

For example, the level of the adhesion between the first protective layer 2 and the weak portion 12 is greater than or equal to level 1.

For example, the material of the second protective layer 3 is the same as that of the first protective layer 2.

In these optional embodiments, these specific optional materials are used, so that the first protective layer 2 has relatively good anti-corrosion performance.

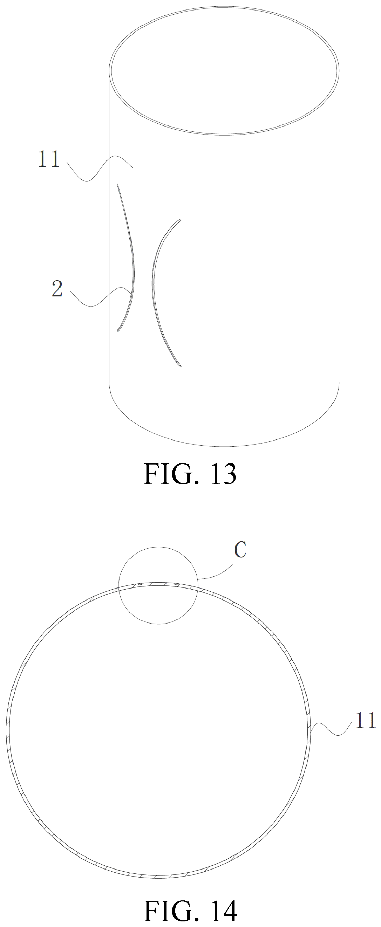

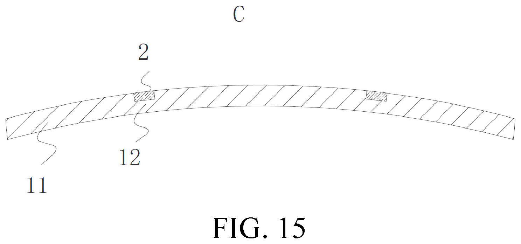

Referring to FIGs. 13 to 15, FIG. 13 is a schematic structural view of a shell of a battery cell provided in an embodiment of the present application; FIG. 14 is a cross-sectional view of a shell of a battery cell provided in an embodiment of the present application; and FIG. 15 is an enlarged schematic structural view of a portion C shown in FIG. 14.

According to an embodiment of the present application, as shown in FIGs. 4, 13 to 15, the casing 1 includes a shell 15 and an end cover 16. The shell 15 has an opening, and the end cover 16 closes the opening. The wall portion 11 is the end cover 16 or a wall of the shell 15.

For example, as shown in FIGs. 13 to 15, the wall portion 11 is a wall of the shell 15.

The casing 1 includes the shell 15 and the end cover 16, and the shell 15 fits the end cover 16 to form the casing1.

The end cover 16 is a component that fits to the opening of the shell 15 to isolate an internal environment of the battery cell 10 from the external environment. A shape of the end cover 16 is not limited and may be adapted to a shape of the shell 15 to fit the shell 15. Optionally, the end cover 16 may be made of a material with specified hardness and strength (for example, aluminum alloy), so that the end cover 16 is less likely to deform under extrusion and collision, thereby enabling the battery cell 10 to have a higher structural strength and enhanced safety performance. Functional components such as an electrode terminal may be disposed on the end cover 16. The electrode terminal can be configured to electrically connect to an electrode assembly, to output or input the electric energy of the battery cell 10. In some embodiments, a pressure relief mechanism used to relieve the internal pressure when the internal pressure or temperature in the battery cell 10 reaches a threshold value may also be provided on the end cover 16. The end cover 16 may also be made of multiple materials, for example, copper, iron, aluminum, stainless steel, an aluminum alloy, or plastic cement, which is not particularly limited in the embodiments of the present application. In some embodiments, an insulating component may also be arranged on an inner side of the end cover 16. The insulating component can be configured to isolate the electrically connected components in the shell 15 from the end cover 16, thereby reducing the risk of short circuit. Exemplarily, the insulating component may be made of plastic, rubber, or the like.

The shell 15 is an assembly configured to fit the end cover 16 to form an internal environment in the battery cell 10. The formed internal environment can be configured to accommodate the electrode assembly, the electrolyte solution, and other components. The shell 15 and the end cover 16 may be separate components. The shell 15 is provided with an opening, and the end cover 16 covers the opening at the opening to form the internal environment of the battery cell 10. Without limitation, the end cover 16 and the shell 15 may also be integrated. Specifically, the end cover 16 and the shell 15 may form a shared connection surface before other components are arranged inside the shell, and then the end cover 16 covers the shell 15 when the inside of the shell 15 needs to be enclosed. The shell 15 may be of various shapes and sizes, such as a rectangular shape, a cylindrical shape, and a hexagonal prism shape. Specifically, the shape of the shell 15 may be determined according to the specific shape and size of the electrode assembly. The shell 15 may be made of various materials, for example, copper, iron, aluminum, stainless steel, an aluminum alloy, or plastic cement, which is not particularly limited in the embodiments of the present application.

In these optional embodiments, the wall portion 11 may be the end cover 16, a bottom wall of the shell 15, a side wall of the shell 15, and the weak portion 12 is arranged on the end cover16, the bottom wall or the side wall at a position close to an edge, so that it is not prone to fatigue failure under gas pressure. This reduces the risk earlier opening up of the weak portion 12, so that the battery cell 10 can work normally.

The battery cell 10 generally includes an electrode assembly. The electrode assembly includes a positive electrode, a negative electrode, and an insulation member. During the charge-discharge process of the battery cell. active ions (e.g., lithium ions) are intercalated and deintercalated back and forth between the positive electrode and the negative electrode The insulation member is arranged between the positive electrode and the negative electrode, and mainly functions to prevent a short circuit between the positive electrode and the negative electrode while allowing active ions to pass through.

In some embodiments, the positive electrode may be a positive electrode plate, and the positive electrode plate may include a positive electrode current collector and a positive electrode active material disposed on at least one surface of the positive electrode current collector.

For example, the positive electrode current collector has two opposite surfaces in a thickness direction, and the positive electrode active material is disposed on either or both of the two opposite surfaces of the positive electrode current collector.

For example, the positive electrode current collector may be a metal foil or a composite current collector. For example, the metal foil can be silver-surface-processed stainless steel, copper, aluminum, nickel, a carbon electrode, carbon, nickel, or titanium. The composite current collector may include a polymer material substrate layer and a metal layer. The composite current collector can be formed by forming a metal material (aluminium, an aluminum alloy, nickel, a nickel alloy, titanium, a titanium alloy, silver and a silver alloy, etc.) on a polymer material substrate (such as polypropylene, polyethylene terephthalate, polybutylene terephthalate, polystyrene, and polyethylene, etc.).

For example, the positive electrode active material may include at least one of a lithium-containing phosphate, a lithium transition metal oxide, and their respective modified compounds. However, the present application is not limited to these materials, and other conventional materials that can be used as positive electrode active materials of batteries may also be used. These positive electrode active materials may be used alone or in combination of two or more thereof.

In some embodiments, the positive electrode may be made of foamed carbon or a foamed metal. The foamed metal may be foamed nickel, foamed copper, foamed aluminum, a foamed alloy, or the like. When the foamed metal is used as the positive electrode, the surface of the foamed metal may not be provided with the positive electrode active material. Certainly, the positive electrode active material may also be provided. For example, a lithium source material, metal potassium, or metal sodium may further be filled and/or deposited in the foamed metal, where the lithium source material is metal lithium and/or a lithium-rich material.

In some embodiments, the negative electrode may be a negative electrode plate. The negative electrode plate may include a negative electrode current collector.

For example, the negative electrode current collector may be a metal foil or a composite current collector. For example, the metal foil can be silver-surface-processed stainless steel, copper, aluminum, nickel, a carbon electrode, carbon, nickel, or titanium. The composite current collector may include a polymer material substrate layer and a metal layer. The composite current collector can be formed by forming a metal material (copper, a copper alloy, nickel, a nickel alloy, titanium, a titanium alloy, silver and a silver alloy, etc.) on a polymer material substrate (such as polypropylene, polyethylene terephthalate, polybutylene terephthalate, polystyrene, and polyethylene, etc.).

For example, the negative electrode plate may include a negative electrode current collector and a negative electrode active material disposed on at least one surface of the negative electrode current collector.

For example, the negative electrode current collector has two opposite surfaces in a thickness direction, and the negative electrode active material is disposed on either or both of the two opposite surfaces of the negative electrode current collector.

For example, the negative electrode active material may be a well-known negative electrode active material for the battery cell in the art. For example, the negative electrode active material may include at least one of artificial graphite, natural graphite, soft carbon, hard carbon, a silicon based material, a tin-based material, lithium titanate, or the like.

In some embodiments, the negative electrode may be made of foamed carbon or a foamed metal. The foamed metal may be foamed nickel, foamed copper, foamed aluminum, a foamed alloy, or the like. When the foamed metal is used as the negative electrode plate, the surface of the foamed metal may not be provided with the negative electrode active material. Certainly, the negative electrode active material may also be provided.

For example, a lithium source material, metal potassium, or metal sodium may further be filled and/or deposited in the negative electrode current collector, where the lithium source material is metal lithium and/or a lithium-rich material.

In some embodiments, the material of the positive electrode current collector may be aluminum, and the material of the negative electrode current collector may be copper.

In some embodiments, the electrode assembly further includes an insulation member, and the insulation member is arranged between the positive electrode and the negative electrode.

In some embodiments, the insulation member is a separator. The type of the separator is not particularly limited in the present application, and any well-known separator with a porous structure having good chemical stability and mechanical stability may be used.

For example, the main material of the separator may be selected from at least one of glass fiber, non-woven cloth, polyethylene, polypropylene, polyvinylidene fluoride, and ceramics.

In some embodiments, the insulation member is a solid-state electrolyte. The solid-state electrolyte is arranged between the positive electrode and the negative electrode, and functions to transport ions and isolate the positive electrode and the negative electrode.

In some embodiments, the battery cell further includes an electrolyte, and the electrolyte functions to conduct ions between the positive electrode and the negative electrode. The type of the electrolyte is not particularly limited in the present application, and can be selected as desired. The electrolyte may be in a liquid, gel, or solid state.

In some embodiments, the electrode assembly is of a wound structure. The positive electrode plate and the negative electrode plate are wound into the wound structure.

In some embodiments, the electrode assembly has a stacked structure.

For example, multiple positive electrode plates and negative electrode plates are arranged, and the multiple positive electrode plates and the multiple negative electrode plates are alternately stacked.

For example, multiple positive electrode plates are arranged, the negative electrode plate is folded to form multiple folded segments that are stacked, and one positive electrode plate is sandwiched between adjacent folded segments.

For example, the positive electrode plate and the negative electrode plate are both folded to form multiple folded segments that are stacked.

For example, multiple insulation members are arranged, which are respectively arranged between any adjacent positive electrode plates or negative electrode plates.

For example, the insulation members are consecutively arranged between any adjacent positive electrode plates or negative electrode plates by folding or winding.

In some embodiments, the shape of the electrode assembly can be cylindrical, flat, polygonal prism-shaped, etc.

In some embodiments, the electrode assembly is provided with a tab, and the tab can conduct a current out from the electrode assembly. The tab includes a positive tab and a negative tab.

In some embodiments, the battery cell 10 further includes an electrolyte, and the electrolyte functions to conduct ions between the positive electrode and the negative electrode. The type of the electrolyte is not particularly limited in the present application, and can be selected as desired. The electrolyte may be in a liquid, gel, or solid state.

In a second aspect, the present application provides a battery, which includes the battery cell described above.

In a third aspect, the present application provides an electrical apparatus, which includes multiple battery cells 10 described above or multiple batteries described above configured to provide electric energy.

According to some embodiments of the present application, referring to FIGs. 5 to 8, the present application provides a battery cell 10. The battery cell 10 includes a casing 1, a first protective layer 2 and a second protective layer 3. The casing 1 includes a shell 15 and an end cover 16. The shell 15 has an opening, and the end cover 16 closes the opening. The end cover 16 has a wall portion 11, and the wall portion 11 is arranged with a body portion 14, a strengthening portion 13 and a weak portion 12, where the body portion 14 connects the strengthening portion 13 and the weak portion 12. The weak portion 12 is configured to rupture when the internal pressure or temperature of the battery cell 10 reaches to a threshold value. The wall portion 11 has an inner surface 111 and an outer surface 112 that are oppositely arranged in a thickness direction. The wall portion 11 is provided with the first recess 113 depressed from the inner surface 111, and a portion of the wall portion 11 corresponding to a bottom of the first recess 113 forms the weak portion 12. The first protective layer 2 is attached to the outer surface 112 and covers the weak portion 12, and extends toward the body portion 14, so that the first protective layer 2 covers at least a part of the body portion 14. In a radial direction of the wall portion 11, a size of an area of the body portion 14 covered by the first protective layer 2 is greater than or equal to 0.1 mm. The thickness of the first protective layer 2 is 20 µm. The strength of the first protective layer 2 is less than or equal to the strength of the weak portion 12. The strengthening portion 13 is arranged to protrude from the inner surface 111, and the wall portion 11 is provided with a first groove 131 depressed relative to the outer surface 112 at a position corresponding to the strengthening portion 13. The second protective layer 3 is at least partly arranged in the first groove 131. The second protective layer 3 is level with an edge of an opening of the first groove 131.

In the battery cell 10 provided in the present application, the battery cell 10 includes the casing 1 and the first protective layer 2. The casing 1 has the wall portion 11, the wall portion 11 is provided with the weak portion 12, and the weak portion 12 ruptures when the internal pressure or temperature of the battery cell 10 reaches to the threshold value. The first protective layer 2 covers at least part of the weak portion 12, so as to protect the weak portion 12, reduce the corrosion of the weak portion 12, and ameliorate the impact on the bursting pressure of the weak portion 12. In addition, the first protective layer 2 also has a buffering effect on the weak portion 12, to reduce the risk of scratching or bumping personnel or objects by the weak portion 12 that ruptures when the internal pressure or temperature of the battery cell 10 reaches to the threshold value; and effectively relieve the case in which the weak portion 12 is activated to rupture in advance during use. Therefore, the service life and the reliability during use of the battery cell 10 having the first protective layer 2 are improved.

Although the present application has been described with reference to the preferred embodiments, various improvements may be made and components therein may be replaced with equivalents without departing from the scope of the present application. In particular, the technical features mentioned in the various embodiments can be combined in any manner as long as there is no structural conflict. This application is not limited to the specific embodiments disclosed herein, but rather includes all technical solutions falling within the scope of the claims.

## Claims

1. A battery cell, comprising:
a casing, having a wall portion, the wall portion being provided with a weak portion, and the weak portion being configured to rupture when the internal pressure or temperature of the battery cell reaches to a threshold value; and
a first protective layer, arranged on the wall portion and covering at least part of the weak portion.

2. The battery cell according to claim 1, wherein the first protective layer is located on an outer side of the wall portion.

3. The battery cell according to claim 2, wherein:
the wall portion has an inner surface and an outer surface that are oppositely arranged in a thickness direction;
the wall portion is provided with a first recess depressed from the inner surface, and a portion of the wall portion corresponding to a bottom of the first recess forms the weak portion; and
the first protective layer is attached to the outer surface and covers the weak portion.

4. The battery cell according to claim 2, wherein:
the wall portion has an inner surface and an outer surface that are oppositely arranged in a thickness direction;
the wall portion is provided with a second recess depressed from the outer surface, and a portion of the wall portion corresponding to a bottom of the second recess forms the weak portion; and
the first protective layer is at least partly arranged in the second recess.

5. The battery cell according to claim 4, wherein the first protective layer is level with an edge of an opening of the second recess.

6. The battery cell according to claim 2, wherein:
the wall portion has an inner surface and an outer surface that are oppositely arranged in a thickness direction;
the wall portion further comprises a strengthening portion projecting from the inner surface, and the wall portion is provided with a first groove depressed relative to the outer surface at a position corresponding to the strengthening portion; and
the battery cell further comprises a second protective layer, and the second protective layer is at least partly arranged in the first groove.

7. The battery cell according to claim 2, wherein:
the wall portion has an inner surface and an outer surface that are oppositely arranged in a thickness direction;
the wall portion further comprises a strengthening portion projecting from the outer surface, and the wall portion is provided with a second groove depressed relative to the inner surface at a position corresponding to the strengthening portion; and
the battery cell further comprises a second protective layer, and the second protective layer is attached to the outer surface and covers the strengthening portion.

8. The battery cell according to any one of claims 1 to 7, wherein the wall portion further comprises a body portion, the weak portion is connected to the body portion, and the first protective layer further covers at least a part of the body portion.

9. The battery cell according to claim 8, wherein in a radial direction of the wall portion, a size of an area of the body portion covered by the first protective layer is greater than or equal to 0.1 mm.

10. The battery cell according to any one of claims 1 to 9, wherein the thickness of the first protective layer is less than or equal to the thickness of the weak portion.

11. The battery cell according to claim 10, wherein the thickness of the first protective layer is greater than or equal to 10 µm.

12. The battery cell according to any one of claims 1 to 11, wherein the strength of the first protective layer is less than or equal to the strength of the weak portion.

13. The battery cell according to any one of claims 1 to 12, wherein the material of the first protective layer is selected from one of a polyarylate, a polyurethane, or an epoxy resin.

14. The battery cell according to any one of claims 1 to 13, wherein the casing comprises:
a shell, having an opening; and
an end cover, closing the opening,
wherein the wall portion is the end cover or a wall of the shell.

15. A battery, comprising a plurality of battery cells according to any one of claims 1 to 14.

16. An electrical apparatus, comprising a plurality of battery cells according to any one of claims 1 to 14 or a plurality of batteries according to claim 15, the battery cells or the batteries being configured to provide electric energy.
